# FASCICULE DE BREVET EUROPEEN

(11) **EP 0 656 315 B1**
(45) Date de publication et mention de la délivrance du brevet: **04.02.1998**
(21) Numéro de dépôt: 94402532.9
(22) Date de dépôt: 09.11.1994
(51) Int. Cl.: B66F 9/065, B60K 5/04, B60K 17/04, B60K 17/28, B60K 11/04, B60K 25/02, E02F 9/20

(54) **Chariot élévateur à bras télescopique**
Gabelhubwagen mit teleskopischem Ausleger
Forklift truck with telescopic arm

(30) Priorité: 01.12.1993 FR 9314367
(43) Date de publication de la demande: 07.06.1995
(73) Titulaire: MANITOU BF, F-44150 Ancenis (FR)
(72) Inventeur: Braud, Marcel Claude, F-49270 Champtoceaux (FR)
(74) Mandataire: Laget, Jean-Loup

(56) Documents cités:
- DE-A- 2 739 325
- DE-A- 3 914 839
- FR-A- 2 650 541
- GB-A- 1 354 132
- GB-A- 2 161 784
- PATENT ABSTRACTS OF JAPAN vol. 17, no. 74 (M-1366) 15 Février 1993 & JP-A-04 276 138 (MAZDA MOTOR CORP.) 1 Octobre 1992

## Description

L'invention est relative à un chariot élévateur à bras télescopique.

Le document DE-A-2739325 décrit un chariot à moteur thermique orienté transversalement.

Les documents GB-A-1354132 et FR-A-2650541 sont relatifs respectivement à un châssis pour tracteur agricole et à un tracteur agricole.

L'invention s'applique en particulier aux chariots élévateurs à déport de charge, dont le bras télescopique est en position abaissée notablement en-dessous de la ligne de visée du conducteur, cette position abaissée correspondant à une visibilité circulaire totale du conducteur assis dans la cabine de conduite.

Dans les entreprises de travaux publics, les entreprises agricoles ou autres entreprises travaillant en continu sur de longues périodes, les chariots élévateurs doivent fonctionner en continu sur ces longues durées, et les durées d'arrêt pour maintenance et entretien de ces machines doivent être minimisées.

Compte tenu du fait que les organes mobiles du bras télescopique, les roulements des organes tournants ou autres emplacements nécessitant un graissage ou une lubrification sont actuellement conçus pour être graissés ou lubrifiés en continu pendant le travail du chariot élévateur, l'arrêt de la machine est principalement effectué pour la révision périodique, la maintenance, l'entretien ou la réparation du groupe moto-propulseur.

L'invention a pour but de permettre un accès facile au groupe moto-propulseur et un échange rapide de celui-ci, de manière à faciliter la maintenance et à réduire les temps d'immobilisation du chariot élévateur.

L'invention a pour objet un chariot élévateur à bras télescopique, du type comportant une cabine, contenant le poste de conduite, et un groupe moto-propulseur, situés de part et d'autre du bras télescopique, un pont avant et un pont arrière et des moyens de transmission mécanique pour transmettre le mouvement d'un moteur thermique à au moins l'un des deux ponts avant ou arrière ou à ces deux ponts avant et arrière, le moteur thermique étant orienté transversalement par rapport au chariot, caractérisé en ce que les moyens de transmission mécanique comportent une boîte de vitesses avec un embrayage entraînée par l'intermédiaire d'un renvoi d'angle à au moins une sortie, et de préférence à deux sorties, dont l'une entraîne la boîte de vitesses, en ce que cette boîte de vitesses est située en position centrale, et en ce que les moyens de transmission mécanique sont reliés à l'arbre de sortie du moteur thermique par l'intermédiaire d'une transmission à cardans.

Selon d'autres caractéristiques de ce mode de réalisation de l'invention :
- le moteur thermique est relié aux moyens de transmission mécanique à travers un longeron du châssis du chariot, longeron dans lequel est prévu à cet effet un orifice une échancrure découpe ou passage analogue,
- une autre sortie du renvoi d'angle entraîne une pompe hydraulique fournissant l'énergie aux actionneurs hydrauliques du chariot,
- l'arbre d'entrée de la boîte de vitesses est sensiblement coaxial à l'arbre d'entraînement de la pompe hydraulique alimentant les organes hydrauliques du chariot,
- le renvoi d'angle est un renvoi d'angle à deux sorties du type à arbre traversant, à une extrémité duquel est montée la boîte de vitesses et à l'autre extrémité duquel est montée la pompe hydraulique du chariot,
- le radiateur et le ventilateur du groupe moto-propulseur sont montés sur le côté du moteur thermique,
- l'axe du ventilateur est sensiblement parallèle à l'axe longitudinal du chariot,
- le ventilateur est entraîné par un renvoi d'angle commandé par le mécanisme de distribution du moteur.

L'invention a également pour objet un chariot élévateur à bras télescopique, du type comportant une cabine contenant le poste de conduite et un groupe moto-propulseur, situés de part et d'autre du bras télescopique, un pont avant et un pont arrière et des moyens de transmission mécanique pour transmettre le mouvement d'un moteur thermique à au moins l'un des deux ponts avant ou arrière ou à ces deux ponts avant et arrière, le moteur thermique étant orienté transversalement par rapport au chariot, caractérisé en ce que les moyens de transmission mécanique comportent une boîte de vitesses avec un embrayage entraînée par l'intermédiaire d'un renvoi d'angle à au moins une sortie et de préférence à deux sorties, dont l'une entraîne la boîte de vitesses, en ce que cette boîte de vitesses est située en position centrale, et en ce que les moyens de transmission mécanique sont reliés à l'arbre de sortie du moteur thermique, par l'intermédiaire d'une partie de connexion allongée.

Selon d'autres caractéristiques de ce mode de réalisation de l'invention :
- le moteur thermique est relié aux moyens de transmission mécanique à travers un longeron du châssis du chariot, longeron dans lequel est prévu à cet effet un orifice, une échancrure, découlpe ou passage analogue.

Une autre sortie du renvoi d'angle entraîne une pompe hydraulique fournissant l'énergie aux actionneurs hydrauliques du chariot.

L'arbre d'entrée de la boîte de vitesses est sensiblement coaxial à l'arbre d'entraînement de la pompe hydraulique alimentant les organes hydrauliques du chariot.

Le renvoi d'angle est un renvoi d'angle à deux sorties du type à arbre traversant, à une extrémité duquel est montée la boîte de vitesses et à l'autre extrémité duquel est montée la pompe hydraulique du chariot.
- le radiateur et le ventilateur du groupe moto-propulseur sont montés sur le côté du moteur thermique.

L'axe du ventilateur est sensiblement parallèle à l'axe longitudinal du chariot.

Le ventilateur est entraîné par un renvoi d'angle commandé par le mécanisme de distribution du moteur.

L'invention sera mieux comprise grâce à la description qui va suivre donnée à titre d'exemple non limitatif au regard des dessins annexés dans lesquels :
La figure 1 représente schématiquement une vue latérale en élévation avec arrachement partiel d'un chariot élévateur selon l'invention ;
La figure 2 représente schématiquement une vue de dessus avec arrachement partiel d'un premier mode de réalisation de chariot élévateur selon l'invention.
La figure 3 représente schématiquement une vue arrière en élévation avec arrachement partiel du chariot élévateur de la figure 2;
La figure 4 représente schématiquement une vue de dessus avec arrachement partiel d'un deuxième mode de réalisation de chariot élévateur selon l'invention;
La figure 5 représente schématiquement une vue arrière avec arrachement partiel du chariot élévateur de la figure 4.

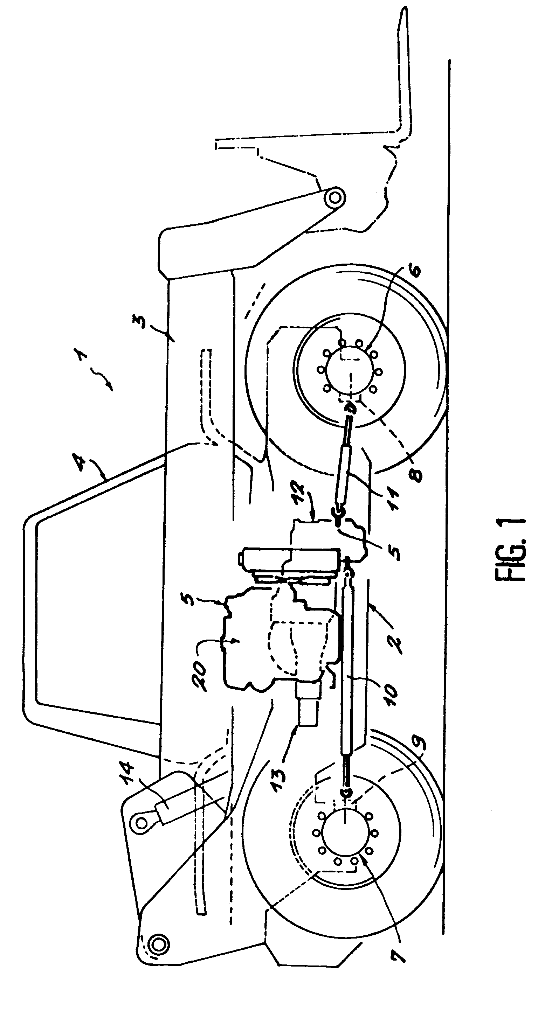

En référence à la figure 1, un chariot élévateur 1 selon l'invention comporte un châssis 2 comportant deux longerons s'étendant longitudinalement de part et d'autre de l'axe de symétrie longitudinal du chariot, sur lequel est articulé à l'arrière un bras télescopique 3, de manière connue en soi.

Le chariot élévateur comporte un cabine 4 contenant le poste de conduite et un groupe moto-propulseur situés de part et d'autre du bras télescopique 3.

Le châssis 2 est supporté par un pont avant 6 et un pont arrière 7, munis chacun de roues gauche et droite.

L'essieu avant 6 est entraîné par un couple conique 8 à différentiel et l'essieu arrière 7 est également entraîné par un couple conique 9 à differéntiel, ces couples coniques 8, 9 étant entraînés par une transmission mécanique reliée au groupe moto-propulseur 5 : dans l'exemple représenté, les couples coniques 8, 9, sont entraînés par les arbres 10 et 11 reliés aux deux sorties de la boîte de vitesses 12 située en position centrale sensiblement sur l'axe longitudinal du chariot.

L'arbre d'entrée de la boîte de vitesses 12 est monté sensiblement coaxialement à l'arbre d'entraînement de la pompe hydraulique 13 d'actionnement des organes hydrauliques du chariot élévateur, tels que par exemple les vérins 14 de levée du bras télescopique 3.

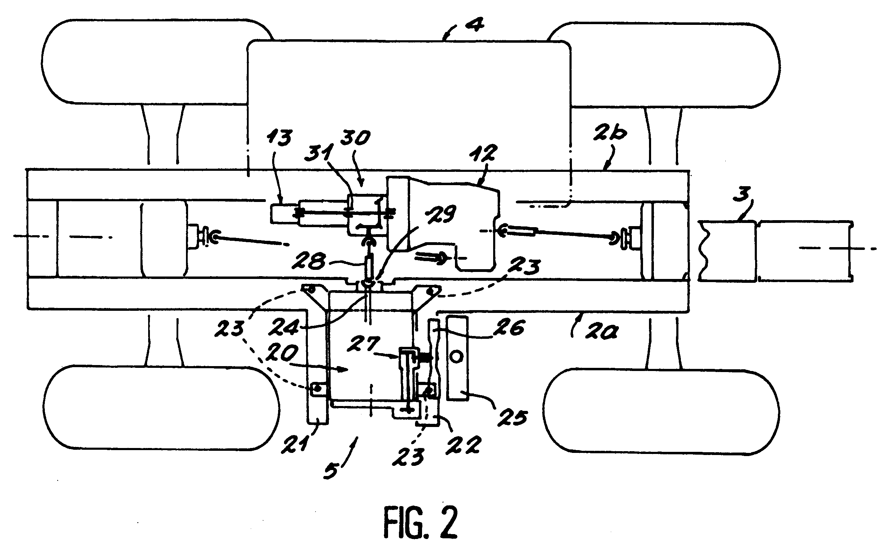

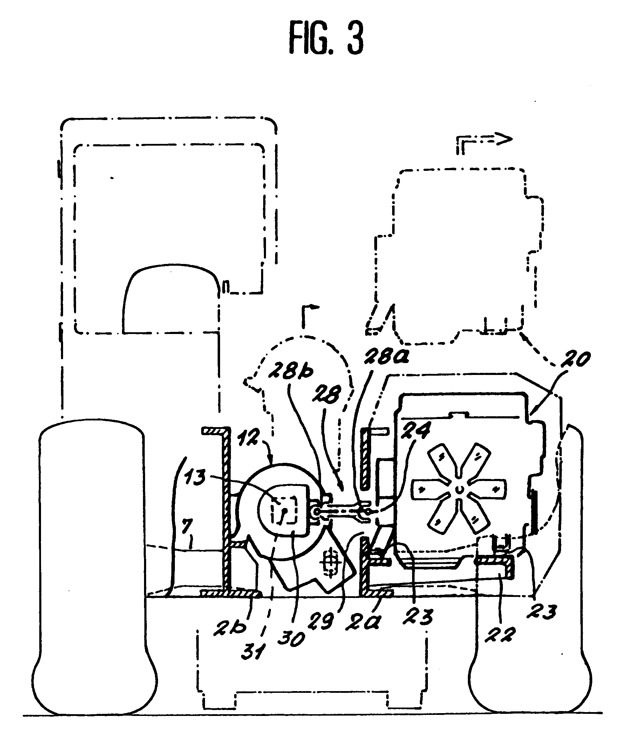

En référence aux figures 2 et 3, les éléments de repères identiques à ceux de la figure 1 désignent des éléments identiques ou similaires à ceux de la figure 1.

Le groupe moto-propulseur 5 comporte un moteur thermique 20 supporté par deux traverses 21, 22 solidaires d'un longeron 2a du châssis 2; des plots élastiques 23 d'isolation et de suspension étant avantageusement prévus pour supporter le moteur thermique 20.

Le moteur thermique 20 ainsi disposé en porte-à-faux par rapport au longeron 2a est de préférence orienté sensiblement transversalement, c'est-à-dire avec son arbre de sortie 24 transversal par rapport au sens longitudinal du chariot.

Le moteur thermique 20 est de type connu en soi; selon une variante avantageuse de l'invention, on prévoit de réduire l'encombrement transversal du groupe moto-propulseur 5 en disposant le radiateur 25 et le ventilateur 26 sur le côté du moteur 20, l'axe du ventilateur 26 étant sensiblement parallèle à l'axe longitudinal du chariot. Dans cette disposition, l'arbre du ventilateur 26 est entraîné par un renvoi d'angle additionnel 27 commandé par la mécanisme de distribution du moteur 20.

L'arbre de sortie 24 du moteur thermique 20 entraîné une transmission 28 à cardans, dont une tête 28a passe à travers un orifice de passage 29 pratiqué dans le longeron 2a, pour permettre une connexion et une déconnexion faciles de l'arbre 28 à cardans.

L'autre extrémité 28b de l'arbre 28 entraîne un renvoi d'angle 30 à deux sorties reliées respectivement à la boîte de vitesses 12 et à la pompe hydraulique 13.

De préférence, le renvoi d'angle 30 est du type comportant un arbre de sortie 31 commun d'entraînement de la pompe hydraulique 13 et de la boîte de vitesses 12: ainsi, les chocs ou à-coups dûs aux changements de vitesse sont amortis au moins partiellement par le circuit hydraulique sous pression de la pompe hydraulique 13.

Grâce à l'invention, le groupe moto-propulseur 5 comprenant le moteur thermique 20, les éléments 25, 26, 27 annexes au moteur 20 et l'arbre 24 de sortie apte à être relié à l'arbre à cardans 28 peut être libéré rapidement en desserrant les fixations sur plots élastiques 23 et en déconnectant l'arbre à cardans 28.

A l'aide d'un système de manutention approprié, on évacue ensuite le groupe moto-propulseur 5 comme schématisé en traits interrompus sur la figure 3.

Dans ce mode de réalisation, l'invention évite également toute transmission notable de vibrations entre le groupe moto-propulseur 5 monté sur plots amortisseurs 23 et la boîte de vitesses 12 fixée rigidement au châssis 2, car le joint à cardans 28 à arbres coaxiaux coulissants l'un dans l'autre absorbe les désalignements produits par les vibrations du moteur 20 et ne transmet aucune vibration du moteur 20 à l'extrémité 28b.

En régime de marche, le renvoi d'angle 30 est constamment entraîné en rotation par le moteur thermique 20 pour entraîner la pompe hydraulique 13 ou un ensemble de pompes hydraulique correspondant aux différents actionneurs hydrauliques du chariot pour l'assistance de la direction du chariot, les mouvements et l'extension du bras télescopique, l'assistance du système de freinage, notamment.

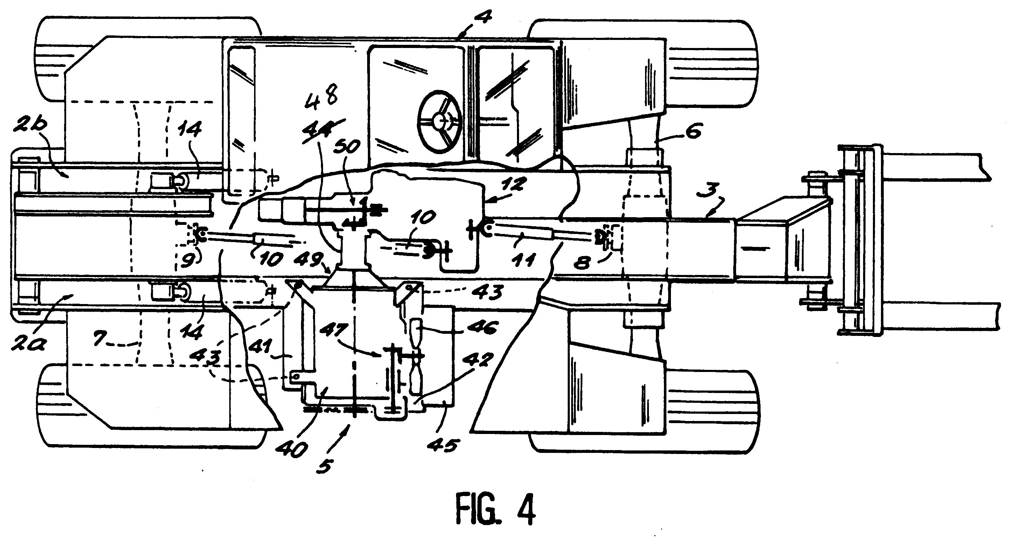

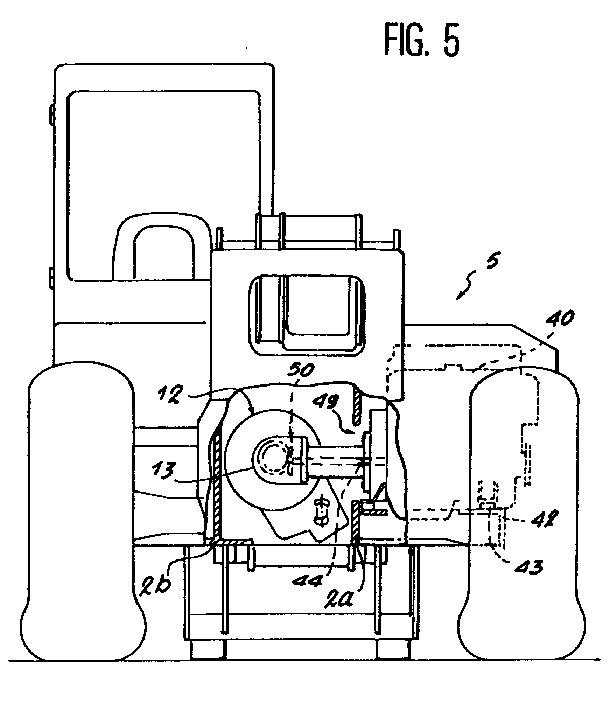

En référence aux figures 4 et 5, les éléments de repères identiques à ceux de la figure 1 désignent des éléments identiques ou similaires à ceux de la figure 1. Dans ce mode de réalisation, le groupe moto-propulseur 5 comporte un moteur 40 supporté par deux traverses 41, 42 solidaires du longeron 2a du châssis 2 au moyen de plots 43 d'isolations et d'amortissement.

L'arbre de sortie 44 étant transversal au chariot, on monte le ventilateur 46 et le radiateur 45 sur un côté du moteur 40. Bien que le ventilateur 46 soit représenté comme entraîné par le renvoi d'angle 47, il apparaîtra clairement à l'homme du métier que tout autre mode d'entraînement du ventilateur 46, par exemple par un moteur électrique ou un moteur hydralique, ne sort pas du cadre de la présente invention.

Un renvoi d'angle 50 présentant ou relié à une partie de connexion allongée 48 est relié à l'arbre d'entraînement 44 du moteur 40 à travers une échancrure 49 ou découpe appropriée dans le longeron 2a. Le renvoi d'angle 50 est fixé rigidement au moteur 40 par une bride ou organe démontable analogue .

Le renvoi d'angle 50 est constamment entraîné par l'arbre 44 du moteur 40 et présente deux arbres de sortie pour entraîner une boîte de vitesses 12 et une ou plusieurs pompes hydrauliques 13 : à cet effet, on prévoit que la boîte de vitesses 12 comporte un embrayage dans les deux modes de réalisation : grâce à cet embrayage incorporé uniquement au niveau de la boîte de vitesses 12, la ou les pompes hydrauliques 13 sont constamment entraînées dès le démarrage du moteur 40.

L'invention n'est nullement limitée aux deux modes de réalisation décrits, mais couvre au contraire toute modification de forme et toute variante de réalisation dans le cadre et l'esprit de l'invention.

## Revendications

1. Chariot élévateur à bras télescopique, du type comportant une cabine (4) contenant le poste de conduite et un groupe moto-propulseur (5), situés de part et d'autre du bras télescopique, un pont avant et un pont arrière et des moyens de transmission mécanique pour transmettre le mouvement d'un moteur thermique à au moins l'un des deux ponts avant ou arrière ou à ces deux ponts avant et arrière, le moteur thermique (20, 40) étant orienté transversalement par rapport au chariot, caractérisé en ce que les moyens de transmission mécanique comportent une boîte de vitesses (12) avec un embrayage entraînée par l'intermédiaire d'un renvoi d'angle (30, 50) à au moins une sortie et de préférence à deux sorties, dont l'une entraîne la boîte de vitesses (12), en ce que cette boîte de vitesses (12) est située en position centrale, et en ce que les moyens de transmission mécanique (30, 12) sont reliés à l'arbre de sortie (24, 44) du moteur thermique (20) par l'intermédiaire d'une transmission à cardans (28).

2. Chariot selon la revendication 1, caractérisé en ce que le moteur thermique (20, 40) est relié aux moyens de transmission mécanique (30, 12) à travers un longeron (2a) du châssis (2) du chariot, longeron (2a) dans lequel est prévu à cet effet un orifice (29), une échancrure (49), découpe ou passage analogue.

3. Chariot selon la revendication 1 ou 2, caractérisé en ce qu'une autre sortie du renvoi d'angle (30, 50) entraîne une pompe hydraulique (13) fournissant l'énergie aux actionneurs hydrauliques du chariot.

4. Chariot selon la revendication 3, caractérisé en ce que l'arbre d'entrée de la boîte de vitesses (12) est sensiblement coaxial à l'arbre d'entraînement de la pompe hydraulique (13) alimentant les organes hydrauliques du chariot (1).

5. Chariot selon la revendication 1, caractérisé en ce que le renvoi d'angle (30) est un renvoi d'angle à deux sorties du type à arbre traversant, à une extrémité duquel est montée la boîte de vitesses (12) et à l'autre extrémité duquel est montée la pompe hydraulique (13) du chariot (1).

6. Chariot selon l'une quelconque des revendications précédentes, caractérisé en ce que le radiateur (25, 45) et le ventilateur (26, 46) du groupe moto-propulseur sont montés sur le côté du moteur thermique (20, 40).

7. Chariot selon la revendication 6, caractérisé en ce que l'axe du ventilateur (26) est sensiblement parallèle à l'axe longitudinal du chariot (1).

8. Chariot selon la revendication 6 ou 7, caractérisé en ce que le ventilateur (26, 46) est entraîné par un renvoi d'angle (27, 47) commandé par le mécanisme de distribution du moteur (20, 40).

9. Chariot élévateur à bras télescopique, du type comportant une cabine (4) contenant le poste de conduite et un groupe moto-propulseur (5), situés de part et d'autre du bras télescopique, un pont avant et un pont arrière et des moyens de transmission mécanique pour transmettre le mouvement d'un moteur thermique à au moins l'un des deux ponts avant ou arrière ou a ces deux ponts avant et arrière, le moteur thermique (40) étant orienté transversalement par rapport au chariot, caractérisé an ce que les moyens de transmission mécanique comportent une boîte de vitesses (12) avec un embrayage entraînée par l'intermédiaire d'un renvoi d'angle (50) à au moins une sortie et de préférence à deux sorties, dont l'une entraîne la boîte de vitesses (12), en ce que cette boîte de vitesses (12) est située en position centrale, et en ce que les moyens de transmission mécanique (50, 12) sont reliés à l'arbre de sortie (44) du moteur thermique (40) par l'intermédiaire d'une partie de connexion allongée (48).

10. Chariot selon la revendication 9, caractérisé en ce que le moteur thermique (40) est relié aux moyens de transmission mécanique (50, 12) à travers un longeron (2a) du châssis (2) du chariot, longeron (2a) dans lequel est prévu à cet effet un orifice (29), une échancrure (49), découpe ou passage analogue.

11. Chariot selon la revendication 9 ou 10 caractérisé en ce qu'une autre sortie du renvoi d'angle (50) entraîne une pompe hydraulique (13) fournissant l'énergie aux actionneurs hydrauliques du chariot.

12. Chariot selon la revendication 11, caractérisé en ce que l'arbre d'entrée de la boîte de vitesses (12) est sensiblement coaxial à l'arbre d'entraînement de la pompe hydraulique (13) alimentant les organes hydrauliques du chariot (1).

13. Chariot selon la revendication 9, caractérisé en ce que le renvoi d'angle (50) est un renvoi d'angle à deux sorties du type à arbre traversant, à une extrémité duquel est montée la boîte de vitesses (12) et à l'autre extrémité duquel est montée la pompe hydraulique (13) du chariot (1).

14. Chariot selon l'une quelconque des revendications 9 à 13, caractérisé en ce que le radiateur (45) et le ventilateur (46) du groupe moto-propulseur sont montés sur le côté du moteur thermique (40).

15. Chariot selon la revendication 6, caractérisé en ce que l'axe du ventilateur (46) est sensiblement parallèle à l'axe longitudinal du chariot (1).

16. Chariot selon la revendication 6 ou 7, caractérisé en ce que le ventilateur (46) est entraîné par un renvoi d'angle (47) commandé par le mécanisme de distribution du moteur (40).

## Claims

1. A lift truck having a telescopic arm, of the type including a cab (4) containing the driver's station and a motor propulsion unit (5), located to either side of the telescopic arm, a front bridge and a rear bridge and mechanical transmission means for transmitting the movement of an internal combustion engine to at least one of the two front or rear bridges or to both these front and rear bridges, the internal combustion engine (20, 40) being oriented transversely with respect to the truck, characterised in that the mechanical transmission means includes a gearbox (12) with a clutch driven by means of an angled transmission (30, 50) having at least one output and preferably two outputs, one of which drives the gearbox (12), in that this gearbox (12) is situated in a central position and in that the mechanical transmission means (30, 12) are connected to the output shaft (24, 44) of the internal combustion engine (20) by means of a Cardan transmission (28).

2. A truck according to Claim 1, characterised in that the internal combustion engine (20, 40) is connected to the mechanical transmission means (30, 12) through a longitudinal member (2a) of the truck chassis (2), in which longitudinal member (2a) there is provided to this effect an opening (29), a notch (49), cut-out or similar passage.

3. A truck according to Claim 1 or 2, characterised in that another output from the angled transmission (30, 50) drives an hydraulic pump (13) supplying energy to the hydraulic actuators of the truck.

4. A truck according to Claim 3, characterised in that the input shaft of the gearbox (12) is substantially coaxial with the drive shaft of the hydraulic pump (13) supplying the hydraulic devices of the truck (1).

5. A truck according to Claim 1, characterised in that the angled transmission (30) is a double output angled transmission of the type having a through-shaft, at one end of which is mounted the gearbox (12) and at the other end of which is mounted the hydraulic pump (13) of the truck (1).

6. A truck according to any one of the preceding claims, characterised in that the radiator (25, 45) and the fan (26, 46) of the motor propulsion unit are mounted at the internal combustion engine (20, 40) side.

7. A truck according to Claim 6, characterised in that the shaft of the fan (26) is substantially parallel to the longitudinal axis of the truck (1).

8. A truck according to Claim 6 or 7, characterised in that the fan (26, 46) is driven by an angled transmission (27, 47) controlled by the timing mechanism of the engine (20, 40).

9. A lift truck having a telescopic arm, of the type including a cab (4) containing the driver's station and a motor propulsion unit (5), located to either side of the telescopic arm, a front bridge and a rear bridge and mechanical transmission means for transmitting the movement of an internal combustion engine to at least one of the two front or rear bridges or to both of these front and rear bridges, the internal combustion engine (40) being oriented transversely with respect to the truck, characterised in that the mechanical transmission means includes a gearbox (12) with a clutch driven by means of an angled transmission (50) having at least one output and preferably two outputs, one of which drives the gearbox (12), in that this gearbox (12) is situated in a central position and in that the mechanical transmission means (50, 12) are connected to the output shaft (44) of the internal combustion engine (40) by means of a part of an elongate connection (48).

10. A truck according to Claim 9, characterised in that the internal combustion engine (40) is connected to the mechanical transmission means (50, 12) through a longitudinal member (2a) of the truck chassis (2), in which longitudinal member (2a) there is provided to this effect an opening (29), a notch (49), cut-out or similar passage.

11. A truck according to Claim 9 or 10, characterised in that another output from the angled transmission (50) drives an hydraulic pump (13) supplying energy to the hydraulic actuators of the truck.

12. A truck according to Claim 11, characterised in that the input shaft of the gearbox (12) is substantially co-axial with the drive shaft of the hydraulic pump (13) supplying the hydraulic devices of the truck (1).

13. A truck according to Claim 9, characterised in that the angled transmission (50) is a double output angled transmission of the type having a through-shaft, at one end of which is mounted the gearbox (12) and at the other end of which is mounted the hydraulic pump (13) of the truck (1).

14. A truck according to any one of Claims 9 to 13, characterised in that the radiator (45) and the fan (46) of the motor propulsion unit are mounted at the internal combustion engine (40) side.

15. A truck according to Claim 6, characterised in that the shaft of the fan (46) is substantially parallel to the longitudinal axis of the truck (1).

16. A truck according to Claim 6 or 7, characterised in that the fan (46) is driven by an angled transmission (47) controlled by the timing mechanism of the engine (40).

## Patentansprüche

1. Gabelstapler mit Teleskoparm von der Art, der eine Kabine (4) mit dem Fahrersitz und eine Antriebseinheit (5), die beiderseits des Teleskoparms angeordnet sind, eine vordere Antriebsachse und eine hintere Antriebsachse sowie eine mechanische Getriebeeinheit, um die Drehung eines Verbrennungsmotors auf wenigstens die vordere und hintere oder auf beide Antriebsachsen zu übertragen, aufweist, wobei der Verbrennungsmotor (20, 40) quer mit Bezug auf den Gabelstapler angeordnet ist, dadurch gekennzeichnet, daß die mechanische Getriebeeinheit ein Schaltgetriebe (12) mit einer Kupplung umfaßt, daß unter Zwischenschaltung eines Winkeltriebes (30, 50) mit wenigstens einem Ausgang und vorzugsweise zwei Ausgängen angetrieben ist, von denen der eine das Schaltgetriebe (12) antreibt, daß das Schaltgetriebe (12) mittig angeordnet und daß die mechanische Getriebeeinheit (30, 12) mit der Ausgangswelle (24, 44) des Verbrennungsmotors (20) über eine Kardanwelle (28) verbunden ist.

2. Gabelstapler nach Anspruch 1, dadurch gekennzeichnet, daß der Verbrennungsmotor (20, 40) mit der mechanischen Getriebeeinheit (30, 50, 12) quer durch einen Längsträger (2a) des Fahrgestells (2) des Gabelstaplers verbunden sind, wobei in oder an dem Längsträger (2a) zu diesem Zweck eine Öffnung (29), eine Ausbiegung (49), ein Ausschnitt oder ein analoger Durchgang vorgesehen ist.

3. Gabelstapler nach Anspruch 1 oder 2, dadurch gekennzeichnet, daß ein anderer Ausgang des Winkeltriebes (30, 50) eine Hydraulikpumpe (13), die Energie auf die Hydraulik-Betätigungselemente (14) des Gabelstaplers (2) überträgt, antreibt.

4. Gabelstapler nach Anspruch 3, dadurch gekennzeichnet, daß die Eingangswelle des Schaltgetriebes (12) im wesentlichen koaxial zur Antriebswelle der Hydraulikpumpe (13), die die Hydraulikeinheiten des Gabelstaplers (1) beaufschlagt, angeordnet ist.

5. Gabelstapler nach Anspruch 1, dadurch gekennzeichnet, daß der Winkeltrieb (30, 50) zwei Ausgänge in der Art einer Durchgangswelle aufweist, mit deren einem Ende das Schaltgetriebe (12) und mit deren anderem Ende die Hydraulikpumpe (13) des Gabelstaplers (1) verbunden ist.

6. Gabelstapler nach irgendeinem der vorhergehenden Ansprüche, dadurch gekennzeichnet, daß der Kühler (25, 45) und der Ventilator (26, 46) der Antriebseinheit seitlich vom Verbrennungsmotor (20, 40) angeordnet sind.

7. Gabelstapler nach Anspruch 6, dadurch gekennzeichnet, daß die Achse des Ventilators (26) im wesentlichen parallel zur Längsachse des Gabelstaplers (1) verläuft.

8. Gabelstapler nach Anspruch 6 oder 7, dadurch gekennzeichnet, daß der Ventilator (26, 46) mittels eines Winkeltriebs (27, 47) der durch den Nockenwellenantrieb des Motors (20, 40) betätigt ist, angetrieben ist.

9. Gabelstapler mit Teleskoparm von der Art, der eine Kabine (4) mit dem Fahrersitz und eine Antriebseinheit (5), die beiderseits des Teleskoparms angeordnet sind, eine vordere Antriebsachse und eine hintere Antriebsachse sowie eine mechanische Getriebeeinheit, um die Drehung eines Verbrennungsmotors auf wenigstens die vordere und hintere oder auf beide Antriebsachsen zu übertragen, aufweist, wobei der Verbrennungsmotor (20, 40) quer mit Bezug auf den Gabelstapler angeordnet ist, dadurch gekennzeichnet, daß die mechanische Getriebeeinheit ein Schaltgetriebe (12) mit einer Kupplung umfaßt, daß unter Zwischenschaltung eines Winkeltriebes (30, 50) mit wenigstens einem Ausgang und vorzugsweise zwei Ausgängen angetrieben ist, von denen der eine das Schaltgetriebe (12) antreibt, daß das Schaltgetriebe (12) mittig angeordnet und daß die mechanische Getriebeeinheit (30, 12) mit der Ausgangswelle (24, 44) des Verbrennungsmotors (20) über ein längliches Verbindungselement verbunden ist.

10. Gabelstapler nach Anspruch 9, dadurch gekennzeichnet, daß der Verbrennungsmotor (20, 40) mit der mechanischen Getriebeeinheit (30, 50, 12) quer durch einen Längsträger (2a) des Fahrgestells (2) des Gabelstaplers verbunden sind, wobei in oder an dem Längsträger (2a) zu diesem Zweck eine Öffnung (29), eine Ausbiegung (49), ein Ausschnitt oder ein analoger Durchgang vorgesehen ist.

11. Gabelstapler nach Anspruch 9 oder 10, dadurch gekennzeichnet, daß ein anderer Ausgang des Winkeltriebes (30, 50) eine Hydraulikpumpe (13), die Energie auf die Hydraulik-Betätigungselemente (14) des Gabelstaplers (2) überträgt, antreibt.

12. Gabelstapler nach Anspruch 11, dadurch gekennzeichnet, daß die Eingangswelle des Schaltgetriebes (12) im wesentlichen koaxial zur Antriebswelle der Hydraulikpumpe (13), die die Hydraulikeinheiten des Gabelstaplers (1) beaufschlagt, angeordnet ist.

13. Gabelstapler nach Anspruch 9, dadurch gekennzeichnet, daß der Winkeltrieb (30, 50) zwei Ausgänge in der Art einer Durchgangswelle aufweist, mit deren einem Ende das Schaltgetriebe (12) und mit deren anderem Ende die Hydraulikpumpe (13) des Gabelstaplers (1) verbunden ist.

14. Gabelstapler nach irgendeinem der Ansprüche 9 bis 13, dadurch gekennzeichnet, daß der Kühler (25, 45) und der Ventilator (26, 46) der Antriebseinheit seitlich vom Verbrennungsmotor (20, 40) angeordnet sind.

15. Gabelstapler nach Anspruch 14, dadurch gekennzeichnet, daß die Achse des Ventilators (26) im wesentlichen parallel zur Längsachse des Gabelstaplers (1) verläuft.

16. Gabelstapler nach Anspruch 14 oder 15, dadurch gekennzeichnet, daß der Ventilator (26, 46) mittels eines Winkeltriebs (27, 47) der durch den Nockenwellenantrieb des Motors (20, 40) betätigt ist, angetrieben ist.
